# EUROPÄISCHE PATENTSCHRIFT

(11) **EP 3 729 246 B1**
(45) Veröffentlichungstag und Bekanntmachung des Hinweises auf die Patenterteilung: **19.10.2022**
(21) Anmeldenummer: 18825951.9
(22) Anmeldetag: 14.12.2018
(51) Int. Cl.: G06F 3/041, G06F 3/044

(54) **TOUCHSCREEN MIT ELEKTROOPTISCHEM DISPLAY UND INTEGRIERTER DRUCKSENSIERUNG**
TOUCHSCREEN HAVING ELECTRO-OPTICAL DISPLAY AND INTEGRATED PRESSURE SENSING
ÉCRAN TACTILE À AFFICHAGE ÉLECTRO-OPTIQUE ET DÉTECTION DE PRESSION INTÉGRÉE

(30) Priorität: 22.12.2017 DE 102017223731
(43) Veröffentlichungstag der Anmeldung: 28.10.2020
(73) Patentinhaber: Continental Automotive Technologies GmbH, 30165 Hannover (DE)
(72) Erfinder: BRÜNINGHAUS, Andreas, 51674 Wiehl (DE); HOHMANN, Kai, 64832 Babenhausen (DE); WILDNER, Steffen, 64807 Dieburg (DE)
(74) Vertreter: Continental Corporation
(86) Internationale Anmeldenummer: PCT/EP2018/084872
(87) Internationale Veröffentlichungsnummer: WO 2019/121360

(56) Entgegenhaltungen:
- WO-A1-2017/190388
- US-A1- 2010 253 645
- US-A1- 2011 148 811
- US-A1- 2017 293 377

## Beschreibung

Die Erfindung betrifft einen Touchscreen mit elektrooptischem Display. Aus dem Stand der Technik sind derartige Touchscreens bekannt, bei denen mittels des Touchsceens Eingaben in ein elektronisches System durch ein Berühren des Touchscreens mittels eines Eingabeorgans realisierbar sind und wobei der Touchscreen ein Display und eine erste Sensierungsvorrichtung zur Ermittlung des Ortes der Berührung des Touchscreens und eine zweite Sensierungsvorrichtung zur Ermittlung einer auf den Touchscreen aufgebrachten Kraft aufweist, wobei die Lage des Touchscreen zu einer Referenzfläche veränderbar ist durch Aufbringen der Kraft auf seine Oberfläche. Die zweite Sensierungsvorrichtung wird hierbei verwendet, um eine sichere Berührung des Touchscreen feststellen zu können. Die zweite Sensierungsvorrichtung kann hierbei als kapazitiver Sensor ausgestaltet sein, bei dem durch eine Lageveränderung von zwei Elektroden eines Kondensators zueinander eine Kapazitätsänderung des Kondensators erfolgt und durch ein Messen der Kapazität des Kondensators auf die entsprechende Lageveränderung der Elektroden zueinander geschlossen werden kann und damit auf eine sicher erkannte Berührung des Touchscreens durch ein Eingabeorgan. Die aus dem Stand der Technik bekannten Teile der Kondensatoren sind als diskrete Bauteile ausgeführt, die separat zu den sonstigen Bauteilen der für den Touchscreen erforderlichen Bauteile montiert werden müssen. Diese zusätzliche Montage erfordert zusätzlichen räumlichen und zeitlichen Aufwand. Aus der US 2010253645 A1 ist ein Touchscreen gemäß Oberbegriff des unabhängigen Anspruchs 1 bekannt. Der aus US 2010253645 A1 bekannte Touchscreen weist ein Federelement auf, und kann so in einer definierten Lage gehalten werden und dennoch relativ zu einer Referenzfläche bewegt werden. Weiterhin weist das Federelement des aus der US 2010253645 A1 bekannten Touchscreens eine Blattfeder auf. So kann ein einfach aufgebautes funktionales Federelement realisiert werden, welches zudem Bewegungen in bestimmte Richtungen zulässt und andere Richtungen unterdrückt.

Auch die US 2017293377 A1, die WO 2017190388 A1 und die US 2011148811 A1 beschreiben Touchscreens mit elektrooptischen Displays.

Aufgabe der Erfindung ist es, zusätzlichen Aufwand möglichst zu reduzieren.

Erfindungsgemäß liegt eine Elektrode der zweiten Sensierungsvorrichtung in einer Ebene mit Elektroden des Displays oder in einer Ebene mit Elektroden der ersten Sensierungsvorrichtung. Hierdurch kann die Elektrode der Sensierungsvorrichtung leicht in den zusammen mit den Elektroden des Displays oder mit den Elektroden der ersten Sensierungsvorrichtung angeordnet werden.

Dadurch, dass erfindungsgemäß die Blattfeder geköpft ist können die Freiheitsgrade der Bewegungsrichtungen des Touchscreens leicht und einfach festgelegt werden.

Schließlich sind erfindungsgemäß die Blattfeder oder die Blattfedern gekröpft. So kann die Blattfeder besonders einfach beabstandet zu der Elektrode der zweiten Sensierungsvorrichtung angeordnet werden, wobei der Abstand vorteilhafterweise so gewählt wird, dass er möglichst klein ausfällt ohne dass sich erfindungsgemäß das Federelement und die Elektrode der zweiten Sensierungsvorrichtung berühren. So kann das Federelement als zweite Elektrode der Sensierungsvorrichtung verwendet werden und so wird keine separate zweite Elektrode der jeweiligen zweiten Sensierungsvorrichtung benötigt und so ein Kondensator gebildet, aus dessen jeweiliger Kapazität auf den Abstand zwischen der Elektrode der zweiten Sensierungsvorrichtung und dem Federlelement geschlossen werden kann.

Besonders effektiv ist die Lösung, wenn die Elektrode der zweiten Sensierungsvorrichtung gemeinsam mit den Elektroden des Displays oder Elektroden der ersten Sensierungsvorrichtung hergestellt ist. Hierdurch entstehen kaum zusätzliche Kosten.

Besonders genau kann die zweite Sensierungsvorrichtung arbeiten, wenn die Blattfeder mehrfach gekröpft ist, insbesondere, wenn sie zwei in etwa parallele Abschnitte aufweist und die Verbindung dieser zwei parallelen Abschnitte den kürzesten Abstand der Blattfeder zu der Elektrode der zweiten Sensierungsvorrichtung aufweist.

Besonders einfach kann die elektrische Verbindung des Federelementes mit einem Massepotential hergestellt werden, wenn der Touchscreen ein metallisches oder mit einer metallischen Beschichtung versehenes Gehäuse aufweist und das Federelement elektrisch mit dem Gehäuse verbunden ist und das Gehäuse auf Massepotential liegt. Diese elektrische Verbindung kann gleichzeitig auch die mechanische Verbindung des Federelementes mit dem Gehäuse darstellen. Beispielsweise kann das Federelement mit dem Gehäuse formschlüssig oder stoffschlüssig verbunden sein.

Die Elektrode der zweiten Sensierungsvorrichtung kann über einen flexiblen Leiter, insbesondere eine flexible Leiterplatte mit einer Auswerteeinheit verbunden sein, in der vorteilhafterweise auch die Daten der ersten Sensierungsvorrichtung verarbeitet werden.

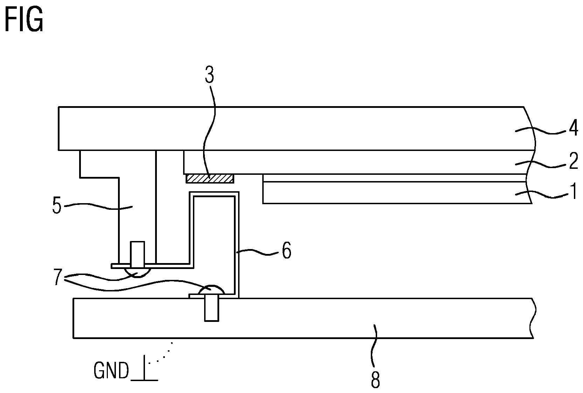

Die Erfindung wird nachfolgend anhand der Figur näher erläutert. Man erkennt im Teilschnitt ein Display 1, eine Touchfolie 2 der ersten Sensierungsvorrichtung mit Elektrode 3 der zweiten Sensierungsvorrichtung, ein Deckglas 4, eine Befestigungsrahmen 5, eine Blattfeder 6, Schrauben 7 und ein Gehäuse 8.

Das Display 1 ist als elektrooptisches Display in Form beispielsweise eines LCD oder OLED ausgeführt. Auf ihm ist die Touchfolie 2 der ersten Sensierungsvorrichtung angebracht, wobei die Touchfolie 2 zusätzlich eine Elektrode 3 der zweiten Sensierungsvorrichtung aufweist, die beabstandet zu der Blattfeder 6 angeordnet ist und somit der Blattfeder 6 einen Kondensator bildet, insbesondere mit einem Abschnitt der Blattfeder 6, der sich zwischen den nahezu parallelen Abschnitten der Blattfeder 6 befindet. Die Elektrode 3 kann gleichzeitig mit der Touchfolie 2 hergestellt werden, was die Produktionskosten und Montagekosten insgesamt senkt.

Die Blattfeder 6 ist über die Schrauben 7 mit dem Befestigungsrahmen 5 und dem Gehäuse 8 verbunden und liegt somit elektrisch auf Masse, wie durch das Erdungszeichen GND dargestellt wird.

Das Deckglas 4 schützt die Touchfolie 2 und das Display 1 vor Umwelteinflüssen und verbessert die optische Anmutung des Touchscreens. Das Deckglas 4 kann teilweise bedruckt sein, um beispielsweise den Befestigungsrahmen 5 zu verbergen. Im dargestellten Beispiel ist nur das Deckglas 4 mit dem Befestigungsrahmen verbunden. So kann der dargestellte Kondensator bestehend aus Elektrode 3 und Blattfeder 6 leicht realisiert werden.

Wenn das Display 1 näher an den Befestigungsrahmen 5 platziert werden soll ist es vorteilhaft, die Elektrode 3 als Teil der im Ausführungsbeispiel nicht dargestellten rückwärtigen Elektroden des Display 1 auszugestalten.

Wenn sich ein Bediener des Touchscreen mit einem Bedienorgan wie beispielsweise einem Finger oder Stift dem Deckglas 4 nähert, wird durch die Touchfolie 2 der ersten Sensierungsvorrichtung die Position erkannt, an der sich das Eingabeorgan auf der Oberfläche des Touchscreens befindet. Wenn das Bedienorgan auf die Oberfläche des Deckglases 4 drückt, gibt die Blattfeder 6 nach, so dass sich die Elektrode 3 der Blattfeder 6 nähert und sich so die Kapazität des Kondensators bestehend aus der Elektrode 3 und der Blattfeder 6 erhöht und so ein Druck auf das Deckglas 4 detektiert werden kann. Da sich die Entfernung zwischen der Blattfeder 6 und der Elektrode 3 in Abhängigkeit der auf das Deckglas 4 aufgebrachten Kraft und damit die Kapazität des Kondensators bestehend aus Elektrode 3 und Blattfeder 6 verändert kann auch die auf das Deckglas 4 aufgebrachte Kraft in einer nicht dargestellten Auswerteeinheit ermittelt werden. Der erfindungsgemäße Touchscreen weist vorteilhafterweise eine Mehrzahl von Elektroden 3 und Blattfedern 6 Die Verwendung von Blattfedern hat sich aber als besonders vorteilhaft herausgestellt.

Durch einen Druck auf das Deckglas wird also der Abstand zwischen dem Deckglas und dem Gehäuse 8 als Referenzfläche verändert.

## Patentansprüche

1. Touchscreen, wobei mittels des Touchscreens (1, 2, 4)
Eingaben in ein elektronisches System durch ein Berühren des Touchscreens (1, 2, 4) mittels eines Eingabeorgans realisierbar sind und wobei der Touchscreen (1, 2, 4) ein elektrooptisches Display(1) und eine erste
Sensierungsvorrichtung (2) zur Ermittlung des Ortes der Berührung des Touchscreens (1, 2, 4) und eine zweite Sensierungsvorrichtung (3, 6) zur Ermittlung einer auf den Touchscreen (1, 2, 4) aufgebrachten Kraft aufweist, wobei die Lage des Touchscreen (1, 2, 4) zu einer Referenzfläche (8) veränderbar ist durch Aufbringen der Kraft auf seine Oberfläche(4), wobei die zweite Sensierungsvorrichtung (3, 6) kapazitiv ausgestaltet ist und eine Elektrode (3) aufweist,
wobei der Touchscreen (1, 2, 4) ein Federelement (6) aufweist, wobei das Federelement eine Blattfeder (6) aufweist und wobei das Federelement (6) beabstandet zu der Elektrode(3) der zweiten Sensierungsvorrichtung (3, 6) angeordnet ist, **dadurch**
**gekennzeichnet, dass** die Elektrode (3) der zweiten Sensierungsvorrichtung (3, 6) in einer Ebene mit Elektroden des Displays (1) oder in einer Ebene mit Elektroden der ersten Sensierungsvorrichtung (2) liegt,
**dass** die Blattfeder (6) gekröpft ist,
**dass** das Federelement (6) eine zweite Elektrode der zweiten Sensierungsvorrichtung (3, 6) bildet, so dass die Elektrode (3) der zweiten Sensierungsvorrichtung (3, 6) mit dem Federelement (6) einen Kondensator bildet, und **dass** das Federelement (6) mit einem Massepotential elektrisch verbunden ist.

2. Touchscreen(1, 2, 4) nach Patentanspruch 1,
**dadurch gekennzeichnet, dass** die Elektrode (3) der zweiten Sensierungsvorrichtung (3, 6)gemeinsam mit den Elektroden des Displays (1) oder Elektroden der ersten Sensierungsvorrichtung (2) hergestellt sind.

3. Touchscreen (1, 2, 4) nach Patentanspruch 1 oder 2,
**dadurch gekennzeichnet, dass** die Blattfeder (6) mehrfach gekröpft ist.

4. Touchscreen (1, 2, 4) nach Patentanspruch 3,
**dadurch gekennzeichnet, dass** die Blattfeder zwei in etwa parallele Abschnitte aufweist.

5. Touchscreen (1, 2, 4) nach Patentanspruch 4,
**dadurch gekennzeichnet, dass** der Kondensator über einen Abschnitt der Blattfeder (6) gebildet wird, der sich zwischen den zwei in etwa parallelen Abschnitten befindet.

6. Touchscreen (1, 2, 4) nach einem der Patentansprüche 4 oder 5, **dadurch gekennzeichnet,**
**dass** der Touchscreen(1, 2, 4) ein Gehäuse 8 aufweist.

7. Touchscreen (1, 2, 4) nach Patentanspruch 6,
**dadurch gekennzeichnet, dass** das Gehäuse (8) aus Metall besteht oder mit einer metallischen Beschichtung versehen ist und das Federelement (6) elektrisch mit dem Gehäuse (8) verbunden ist.

8. Touchscreen (1, 2, 4) nach Anspruch 7,
**dadurch gekennzeichnet, dass** das Gehäuse (8) auf Massepotential liegt.

9. Touchscreen (1, 2, 4) nach einem der Ansprüche 7 bis 8,
**dadurch gekennzeichnet, dass** das Federelement (6) mit dem Gehäuse (8) formschlüssig oder stoffschlüssig verbunden ist.

10. Touchscreen (1, 2, 4) nach Anspruch 8, d a **durch gekennzeichnet, dass** die Blattfeder (6) über Schrauben (7) mit einem Befestigungsrahmen (5) und dem Gehäuse (8) verbunden ist und somit auf Masse liegt.

11. Touchscreen (1, 2, 4) nach einem der vorstehenden Patentansprüche, **dadurch**
**gekennzeichnet, dass** die Elektroden (3) der zweiten Sensierungsvorrichtung über flexible elektrische Verbindungen mit einer Auswerteeinheit verbunden sind.

12. Touchscreen (1, 2, 4) nach Patentanspruch 7, dadurch **dadurch gekennzeichnet, dass** die flexiblen Leitungen als flexible Leiterplatte ausgeführt sind.

13. Touchscreen (1, 2, 4) nach einem der vorstehenden Ansprüche, **dadurch gekennzeichnet** , **das**s die von der Elektrode (3) der zweiten Sensierungsvorichtung generierten Signale in der Auswerteeinheit verarbeitet werden, in der auch die Daten der ersten Sensierungsvorrichtung (2) verarbeitet werden.

## Claims

1. Touchscreen, wherein by means of the touchscreen (1, 2, 4) inputs into an electronic system are able to be realized by the touchscreen (1, 2, 4) being touched by means of an input member and wherein the touchscreen (1, 2, 4) comprises an electro-optical display (1) and a first sensing device (2) for determining the location at which the touchscreen (1, 2, 4) is touched, and a second sensing device (3, 6) for determining a force applied to the touchscreen (1, 2, 4), wherein the position of the touchscreen (1, 2, 4) with respect to a reference surface (8) is variable by way of the force being applied to the surface (4) of said touchscreen, wherein the second sensing device (3, 6) is configured in capacitive fashion and comprises an electrode (3),
wherein the touchscreen (1, 2, 4) comprises a spring element (6), wherein the spring element comprises a leaf spring (6) and wherein the spring element (6) is arranged at a distance from the electrode (3) of the second sensing device (3, 6), **characterized**
**in that** the electrode (3) of the second sensing device (3, 6) lies in a plane with electrodes of the display (1) or in a plane with electrodes of the first sensing device (2),
**in that** the leaf spring (6) is offset,
**in that** the spring element (6) forms a second electrode of the second sensing device (3, 6) such that the electrode (3) of the second sensing device (3, 6) together with the spring element (6) forms a capacitor,
and **in that** the spring element (6) is electrically connected to an earth potential.

2. Touchscreen (1, 2, 4) according to Patent Claim 1, **characterized in that** the electrode (3) of the second sensing device (3, 6) is produced together with the electrodes of the display (1) or electrodes of the first sensing device (2).

3. Touchscreen (1, 2, 4) according to Patent Claim 1 or 2, **characterized in that** the leaf spring (6) is offset multiply.

4. Touchscreen (1, 2, 4) according to Patent Claim 3, **characterized in that** the leaf spring comprises two approximately parallel sections.

5. Touchscreen (1, 2, 4) according to Patent Claim 4, **characterized in that** the capacitor is formed with a section of the leaf spring (6) which is situated between the two approximately parallel sections.

6. Touchscreen (1, 2, 4) according to any of Patent Claims 4 or 5, **characterized in that** the touchscreen (1, 2, 4) comprises a housing 8.

7. Touchscreen (1, 2, 4) according to Patent Claim 6, **characterized in that** the housing (8) consists of metal or is provided with a metallic coating, and the spring element (6) is electrically connected to the housing (8).

8. Touchscreen (1, 2, 4) according to Claim 7, **characterized in that** the housing (8) is at earth potential.

9. Touchscreen (1, 2, 4) according to any of Claims 7 to 8, **characterized in that** the spring element (6) can be connected to the housing (8) in a positively locking manner or cohesively.

10. Touchscreen (1, 2, 4) according to Claim 8, **characterized in that** the leaf spring (6) is connected to a securing frame (5) and to the housing (8) via screws (7) and is therefore at earth.

11. Touchscreen (1, 2, 4) according to any of the preceding claims, **characterized in that** the electrodes (3) of the second sensing device are connected to an evaluation unit via flexible electrical connections.

12. Touchscreen (1, 2, 4) according to Patent Claim 7, **characterized in that** the flexible lines are embodied as a flexible printed circuit board.

13. Touchscreen (1, 2, 4) according to any of the preceding claims, **characterized in that** the signals generated by the electrode (3) of the second sensing device are processed in the evaluation unit, in which the data of the first sensing device (2) are processed as well.

## Revendications

1. Écran tactile, des saisies dans un système électronique par un toucher de l'écran tactile (1, 2, 4) au moyen d'un organe de saisie étant réalisables au moyen de l'écran tactile (1, 2, 4) et l'écran tactile (1, 2, 4) possédant un afficheur électro-optique (1) et un premier dispositif de détection (2) destiné à identifier l'endroit du toucher de l'écran tactile (1, 2, 4) et un deuxième dispositif de détection (3, 6) destiné à identifier une force appliquée sur l'écran tactile (1, 2, 4), la position de l'écran tactile (1, 2, 4) par rapport à une surface de référence (8) étant modifiable par application de la force sur sa surface (4), le deuxième dispositif de détection (3, 6) étant de configuration capacitive et possédant une électrode (3),
l'écran tactile (1, 2, 4) possédant un élément ressort (6), l'élément ressort possédant un ressort à lame (6) et l'élément ressort (6) étant disposé espacé de l'électrode (3) du deuxième dispositif de détection (3, 6), **caractérisé en ce que** l'électrode (3) du deuxième dispositif de détection (3, 6) se trouve dans un plan avec les électrodes de l'afficheur (1) ou dans un plan avec les électrodes du premier dispositif de détection (2),
**en ce que** le ressort à lame (6) est coudé,
**en ce que** l'élément ressort (6) forme une deuxième électrode du deuxième dispositif de détection (3, 6), de sorte que l'électrode (3) du deuxième dispositif de détection (3, 6) forme un condensateur avec l'élément ressort (6),
et **en ce que** l'élément ressort (6) est relié électriquement à un potentiel de masse.

2. Écran tactile (1, 2, 4) selon la revendication 1, **caractérisé en ce que** l'électrode (3) du deuxième dispositif de détection (3, 6) est fabriquée en commun avec les électrodes de l'afficheur (1) ou les électrodes du premier dispositif de détection (2).

3. Écran tactile (1, 2, 4) selon la revendication 1 ou 2, **caractérisé en ce que** le ressort à lame (6) est coudé plusieurs fois.

4. Écran tactile (1, 2, 4) selon la revendication 3, **caractérisé en ce que** le ressort à lame possède deux portions approximativement parallèles.

5. Écran tactile (1, 2, 4) selon la revendication 4, **caractérisé en ce que** le condensateur est formé par une portion du ressort à lame (6) qui se trouve entre les deux portions approximativement parallèles.

6. Écran tactile (1, 2, 4) selon la revendication 4 ou 5, **caractérisé en ce que** l'écran tactile (1, 2, 4) possède un boîtier (8).

7. Écran tactile (1, 2, 4) selon la revendication 6, **caractérisé en ce que** le boîtier (8) se compose de métal ou est pourvu d'un revêtement métallique et l'élément ressort (6) est relié électriquement au boîtier (8).

8. Écran tactile (1, 2, 4) selon la revendication 7, **caractérisé en ce que** le boîtier (8) se trouve au potentiel de masse.

9. Écran tactile (1, 2, 4) selon l'une des revendications 7 à 8, **caractérisé en ce que** l'élément ressort (6) est relié au boîtier (8) par complémentarité de formes ou par fusion de matières.

10. Écran tactile (1, 2, 4) selon la revendication 8, **caractérisé en ce que** le ressort à lame (6) est relié par le biais de vis (7) à un cadre de fixation (5) et au boîtier (8) et se trouve ainsi à la masse.

11. Écran tactile (1, 2, 4) selon l'une des revendications précédentes, **caractérisé en ce que** les électrodes (3) du deuxième dispositif de détection sont reliées à une unité d'interprétation par le biais de liaisons électriques flexibles.

12. Écran tactile (1, 2, 4) selon la revendication 7, **caractérisé en ce que** les lignes flexibles sont réalisées sous la forme d'un circuit imprimé souple.

13. Écran tactile (1, 2, 4) selon l'une des revendications précédentes, **caractérisé en ce que** les signaux générés par les électrodes (3) du deuxième dispositif de détection sont traités dans l'unité d'interprétation, dans laquelle sont également traitées les données du premier dispositif de détection (2).
